# EUROPÄISCHE PATENTSCHRIFT

(11) **EP 0 391 084 B1**
(45) Veröffentlichungstag und Bekanntmachung des Hinweises auf die Patenterteilung: **02.02.1994**
(21) Anmeldenummer: 90104389.3
(22) Anmeldetag: 08.03.1990
(51) Int. Cl.: F16D 41/07, F16D 41/08

(54) **Lastschaltbare Freilaufkupplung**
Load-dependent free-wheel clutch
Embrayage à roue libre commandé par la charge

(30) Priorität: 06.04.1989 DE 3911075
(43) Veröffentlichungstag der Anmeldung: 10.10.1990
(73) Patentinhaber: INA Wälzlager Schaeffler KG, 91063 Herzogenaurach (DE)
(72) Erfinder: Ritter, Joachim, Dipl.-Ing. (FH), D-8522 Herzogenaurach (DE); Hochmuth, Harald, D-8535 Emskirchen (DE)

(56) Entgegenhaltungen:
- EP-A- 0 015 674
- CH-A- 432 141
- GB-A- 255 943
- US-A- 3 656 597

## Beschreibung

Die Erfindung betrifft eine lastschaltbare Freilaufkupplung, bestehend aus konzentrisch ineinander angeordneten Klemmringen mit einander gegenüberliegenden Klemmbahnen, zwischen denen Klemmelemente angeordnet sind, wobei auf einen der Klemmringe, welcher durchmesserveränderlich ausgebildet ist, unter Ausnutzung einer Keilflächenwirkung ein gleichachsig zum Klemmring angeordnetes Schaltteil einwirkt, so daß eine Relativdrehung des Schaltteils zum durchmesserveränderlichen Klemmring eine Abstandsänderung der Klemmbahnen hervorruft.

Lastschaltbare Freilaufkupplungen werden überall dort eingesetzt, wo es besondere Betriebsbedingungen erfordern, einen Freilauf in seiner Klemmrichtung freizuschalten, das heißt zeitweise eine Relativdrehung zwischen innerem und äußerem Klemmring zu ermöglichen. Das Freischalten erfolgt in der Regel über den Käfig, indem dieser relativ zu den Klemmringen gedreht wird und damit im Fall einer Klemmrollenfreilaufkupplung die Klemmrollen aus dem Klemmbereich der Rampen verschiebt oder im Fall einer Klemmkörperfreilaufkupplung die Klemmkörper in ihre Freilaufposition kippt. Hierbei können bei größeren Drehmomenten erhebliche Probleme auftreten, weil die Klemmelemente in der Klemmposition elastisch verformt sind, so daß beim Freischalten die einzelnen Klemmelemente aus der Klemmposition herausspringen und Schaltstöße verursachen. In der EP-A-01 82 994 wurde deshalb vorgeschlagen, bei einem Klemmkörperfreilauf einen der Klemmringe sehr dünnwandig auszuführen und mit einem Schaltteil unter Ausnutzung einer Keilflächenwirkung so zu koppeln, daß bei Relativdrehungen von Klemmring und Schaltteil der dünnwandige Klemmring elastisch seinen Durchmesser verändert und damit den Abstand der Klemmbahnen vergrößert bzw. verringert. Damit können die elastischen Verformungen der Klemmelemente in der Klemmposition beim Freischalten durch eine radiale Bewegung des Klemmrings abgebaut werden, so daß beim anschließenden Freischalten über den Käfig Schaltstöße nicht mehr auftreten. Die elastische Verformung des Klemmrings verringert allerdings die Gesamtlebensdauer der Freilaufkupplung, beschränkt das Maß der zulässigen Durchmesserveränderung und erfordert relativ lange Schaltwege.

Die Aufgabe der Erfindung ist es, eine lastschaltbare Freilaufkupplung zu schaffen, bei der ein Freischalten über eine Durchmesserveränderung eines Klemmringes möglich ist, die eine hohe Lebensdauer erreicht und mit kurzen Schaltwegen arbeitet.

Diese Aufgabe wird erfindungsgemäß dadurch gelöst, daß der durchmesserveränderliche Klemmring durch wenigstens einen axial und radial durchgehenden Schlitz unterteilt und durch wenigstens eine Feder entgegen der durch das Schaltteil bewirkbaren Abstandsänderung der Klemmbahnen vorgespannt ist.

Eine besonders günstige Ausgestaltung ergibt sich, wenn wenigstens zwei radial unabhängig voneinander bewegliche Segmente den durchmesserveränderlichen Klemmring bilden, welche im Sinne einer Abstandsvergrößerung der Klemmbahnen radial federnd vorgespannt sind.

In diesem Fall erfolgt die Durchmesserveränderung alleine durch radiale Verschiebungen der Segmente, ohne daß diese elastisch verformt werden. Derartige Segmente sind vorteilhafterweise um einen bestimmten Winkel schwenkbar am Schaltteil gelagert, wobei jeweils im Endbereich des Schwenkwinkels ein Anschlag für eine formschlüssige Mitnahme der Segmente durch das Schaltteil in die jeweilige Drehrichtung vorgesehen ist.

Für die radiale Verschiebung der Segmente durch das Schaltteil sind verschiedene Ausführungen denkbar.

In einer ersten Variante weisen die Segmente jeweils wenigstens eine in Umfangsrichtung geneigte Keilfläche auf, gegen die ein mit dem Schaltteil verbundenes Betätigungselement anläuft. Sind die Segmente konzentrisch zum Schaltteil angeordnet, können als Betätigungselemente mit dem Schaltteil verbundene Nasen vorgesehen sein, oder die Betätigungselemente sind mit dem Ziel der Reibungsverminderung als Rollen ausgebildet, welche in Taschen eines fest mit dem Schaltteil verbundenen Betätigungselementekäfigs angeordnet sind. Im Falle einer gleichachsigen oder konzentrischen Anordnung von Schaltteil und Segmenten ist es möglich, je eines der Segmente mittels wenigstens eines Kniehebelgelenkes mit dem Schaltteil zu koppeln.

In einer anderen fertigungstechnisch einfachen und daher kostengünstigen Ausführungsform weist jedes Segment wenigstens eine in axialer Richtung geneigte kegelige Fläche auf, gegen die die Kegelfläche des Schaltteiles selbst oder eines mit dem Schaltteil verbundenen Kegelringes anläuft. Die Segmente und die Kegelfläche des Schaltteils sind in axialer Richtung relativverschieblich, wobei die Relativverschiebung durch eine entsprechende Kopplung der Segmente mit dem Schaltteil erfolgt. Diese Kopplung besteht beispielsweise darin, daß die Segmente je eine einer Schraubenlinie folgende axiale Stirnfläche aufweisen, gegen die wenigstens ein mit dem Schaltteil verbundenes Betätigungselement anläuft. Eine weitere Variante der Bauform besteht darin, die Segmentbetätigung zwischen den Klemmbahnen anzuordnen, was allerdings voraussetzt, daß die Segmente im Sinn einer Abstandsverringerung der Klemmbahnen vorgespannt sind, während die Segmentbetätigung durch das Schaltteil im Sinne einer Abstandsvergrößerung der Klemmbahnen wirkt.

Diese genannten Betätigungseinrichtungen für die radiale Verschiebung der Segmente sind prinzipiell unabhängig davon anzuwenden, ob der äußere oder der innere Klemmring aus Segmenten zusammengesetzt ist und ob ein Klemmrollen- oder Klemmkörperfreilauf verwendet wird. Im Hinblick auf eine Bauraumminimierung erscheint es jedoch sinnvoll, einen Klemmrollenfreilauf einzusetzen, bei dem der innere Klemmring durch mehrere Segmente gebildet und als Schaltteil eine konzentrisch im inneren Klemmring angeordnete Welle verwendet wird.

Für geringer beanspruchte Bauformen ist es möglich, die Klemmrampen des Klemmrollenfreilaufes an der Klemmbahn des äußeren Klemmringes vorzusehen, während die Außenflächen des aus Segmenten zusammengesetzten inneren Klemmringes glatt sind. Da hierbei die Klemmrollen relativ zu den Segmenten umlaufen, erscheint es für höhere Belastungen günstiger, je eine Klemmrampe an der Außenoberlfäche eines Segmentes vorzusehen, wobei die mit diesen Klemmrampen korrespondierenden Klemmrollen in einem Käfig angeordnet sind, welcher Relativbewegungen der Klemmrollen über die Ausdehnung der Segmente in Umfangsrichtung hinaus verhindert. Ein derartiger Klemmrollenkäfig ist deshalb entweder fest mit der Welle oder, im Fall einer Betätigung der Segmente über in einem Betätigungselementekäfig angeordnete Rollen, einstückig mit diesem Betätigungselementekäfig verbunden.

Bei Klemmrollenfreilaufkupplungen der letztgenannten Bauformen ist es prinzipiell denkbar, die Segmente radial nach außen vorzuspannen, an der Außenoberfläche der Segmente Keilflächen vorzusehen und den Käfig selbst als Schaltteil auszubilden, indem dieser mit gegen die Keilflächen anlaufenden Nasen versehen wird.

Für eine mögliche Anwendung einer oben beschriebenen Freilaufkupplung ist die als Schaltteil ausgebildete Welle mit einem Antriebs- und der aus Segmenten zusammengesetzte innere Klemmring mit einem Abtriebsorgan verbunden, während der äußere Klemmring in einer Tragkonstruktion verdrehfest angeordnet ist. Darüber hinaus kann die Freilaufkupplung auch als eine in zwei Richtungen schaltbare Freilaufkupplung ausgebildet sein.

Einige Bauformen und Anwendungsmöglichkeiten einer erfindungsgemäßen Freilaufkupplung werden im folgenden anhand einiger Ausführungsbeispiele erläutert. Es zeigen:
- Figur 1: einen Querschnitt durch eine Klemmrollenfreilaufkupplung mit Außenstern und einer Segmentbetätigung über an der Welle angebrachte Nasen,
- Figur 2: einen Teil-Längsschnitt durch eine Freilaufkupplung nach Figur 1,
- Figur 3: einen Teilquerschnitt durch eine Klemmrollenfreilaufkupplung mit Segmentbetätigung über in einem fest mit einer Welle verbundenen Käfig angeordnete Rollen,
- Figur 4: einen Längsschnitt der Freilaufkupplung nach Figur 3,
- Figur 5: einen Teilquerschnitt durch eine Klemmrollenfreilaufkupplung mit Segmentbetätigung über Kniehebel,
- Figur 6: eine Klemmrollenfreilaufkupplung mit kippend gelagerten Schwenksegmenten,
- Figur 7: einen Teilquerschnitt einer Klemmrollenfreilaufkupplung mit Segmentbetätigung über Kegelflächen,
- Figur 8: einen Längsschnitt der Klemmrollenfreilaufkupplung nach Figur 7,
- Figur 9: eine Teildraufsicht auf eine Klemmrollenfreilaufkupplung nach Figur 7 und 8,
- Figur 10: einen Querschnitt durch eine Klemmrollenfreilaufkupplung mit Segmentbetätigung durch den Käfig und
- Figur 11: einen Längsschnitt durch die Klemmrollenfreilaufkupplung nach Figur 10.

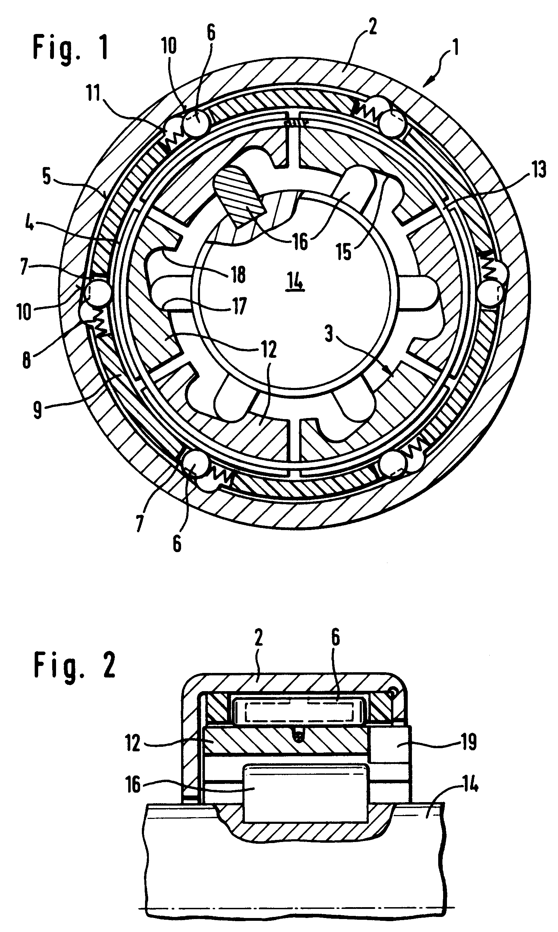

Die Figur 1 zeigt den Querschnitt durch eine lastschaltbare Freilaufkupplung 1, bei der der äußere Klemmring 2 und der innere Klemmring 3 konzentrisch ineinander angeordnet sind und einander gegenüberliegende Klemmbahnen 4, 5 aufweisen, zwischen denen Klemmrollen 6 angeordnet sind, welche in den Taschen 7, durch die Druckfedern 8 in Klemmbereitschaft gehalten, im Klemmrollenkäfig 9 untergebracht sind. Die äußere Klemmbahn 5 weist in Umfangsrichtung geneigte Klemmrampen 10 auf, mit denen die Klemmrollen 6 korrespondieren, wobei die Nasen 11 des Klemmrollenkäfigs 9 ebenfalls in axiale Fortsätze der Rampen 10 eingreifen und somit den Klemmrollenkäfig 9 relativ zum äußeren Klemmring 2 festlegen. Der innere Klemmring 3 ist durchmesserveränderlich und aus den Segmenten 12 zusammengesetzt, deren äußere Oberfläche konzentrisch ist und jeweils einen Teil der Klemmbahn 4 bilden. Die Segmente 12 selbst sind durch die Feder 13 im Sinne einer Vergrößerung des Abstandes der Klemmbahnen 4, 5 radial nach innen vorgespannt und konzentrisch um die Welle 14 angeordnet. Sie weisen an ihrer inneren der Welle 14 zugewandten Fläche je eine in Umfangsrichtung geneigte Keilfläche 15 auf, gegen die je eine mit der Welle 14 verbundene Nase 16 anläuft. Jeweils am Ende der Keilflächen 15 sind Anschlagflächen 17, 18 vorgesehen, welche eine formschlüssige Mitnahme der Segmente 12 durch die Welle 14 in die jeweilige Drehrichtung am Ende des durch die Ausdehnung der Keilfläche 15 in Umfangsrichtung vorgegebenen Schwenkbereichs ermöglichen. In dem in Figur 2 dargestellten Längsschnitt dieser Klemmrollenfreilaufkupplung sind jeweils die axialen Ausdehnungen der einzelnen Bauteile zu erkennen, wobei die an den Segmenten 12 angebrachte in radialer Richtung verlaufende Nut 19 zum Anschluß der Segmente 12 an ein nicht dargestelltes Abtriebsorgan dient, während die Welle 14 z. B. durch einen Preßverband mit einem Antriebsorgan verbunden werden kann und der äußere Klemmring in eine Tragkonstruktion eingesetzt ist.

Bei einer derartigen Freilaufkupplung ergibt sich folgende Funktion: Ausgehend von der in Figur 1 gezeigten Position bewirkt ein Antriebsmoment an der Welle 14 entgegen dem Uhrzeigersinn die Mitnahme der Segmente 12 durch die Nasen 16, welche an der Anschlagfläche 17 anliegen, 50 daß das Antriebsmoment direkt über die Segmente 12 und die Nuten 19 auf ein Abtriebsorgan übertragen wird. Die Klemmrollen 6 werden dabei durch die Druckfedern 8 zwar in Klemmbereitschaft gehalten, ermöglichen jedoch ein freies Umlaufen des inneren Klemmrings 3. Bei einem Antriebsmoment im Uhrzeigersinn an der Welle 14 verschwenkt die Welle 14 zunächst um das durch die Länge der Keilflächen 15 an den Segmenten 12 vorgegebene Maß bis die Nasen 16 an der Anschlagfläche 18 anliegen, wobei sich die Segmente 12 unter der Wirkung der Feder 13 radial nach innen verschieben und den Abstand der Klemmbahnen 4, 5 vergrößern. Dabei können die Klemmrollen 6 trotz Drehung des inneren Klemmrings 3 in Klemmrichtung den Freilauf nicht sperren, so daß die Drehbewegung von der Welle 14 auf das Antriebsorgan übertragen wird. Wird nunmehr am Abtriebsorgan über die Nuten 19 ein Moment im Uhrzeigersinn auf den inneren Klemmring 3 aufgebracht, verschwenkt zunächst die Welle 14 relativ zu den Segmenten 12, die sich infolge der Relativbewegung der Nasen 16 zu den Keilflächen 15 radial nach außen verschieben. Aufgrund des somit wiederum verkleinerten Abstandes der Klemmbahnen 4, 5 befinden sich die Klemmrollen 6 dann in Klemmstellung und sperren ein Umlaufen des inneren Klemmrings 3 relativ zum äußeren Klemmring 2. Eine derartige Anordnung kann z. B. als Antriebsvorrichtung zum Verschieben von Fensterscheiben in Kraftfahrzeugen angewendet werden, wobei beispielsweise eine Handkurbel mit der Welle 14 und der innere Klemmring 3 mit dem Hebemechanismus verbunden wird. Über die Handkurbel kann das Fenster sowohl in Hebe- als auch in Absenkrichtung betätigt werden, während bei einem am Fenster eingeleiteten Moment z. B. in Öffnungsrichtung des Fensters der Klemmrollenfreilauf sperrt und ein unbefugtes Herabschieben des Fensters verhindert.

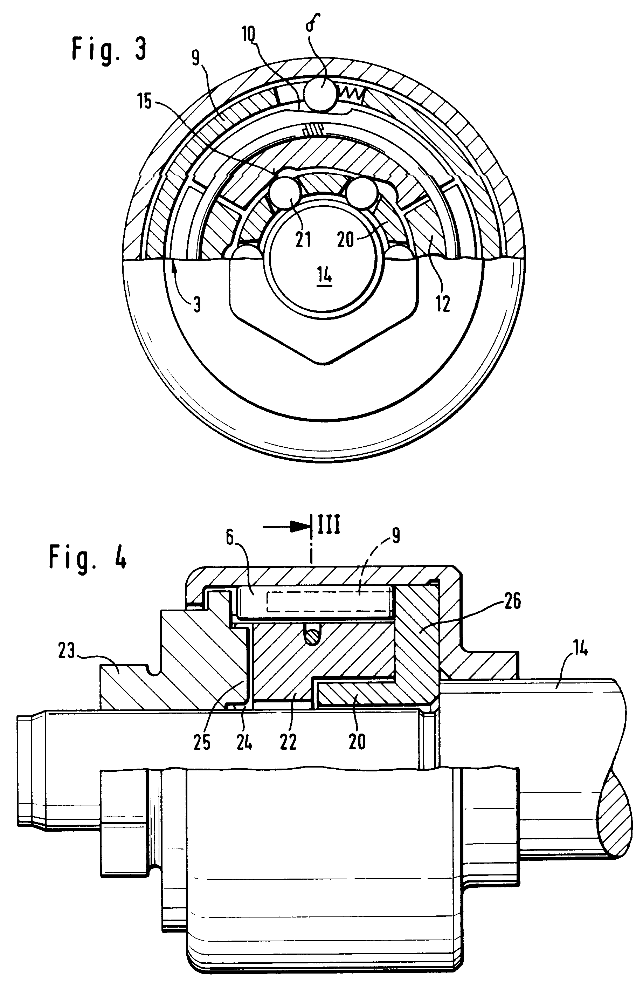

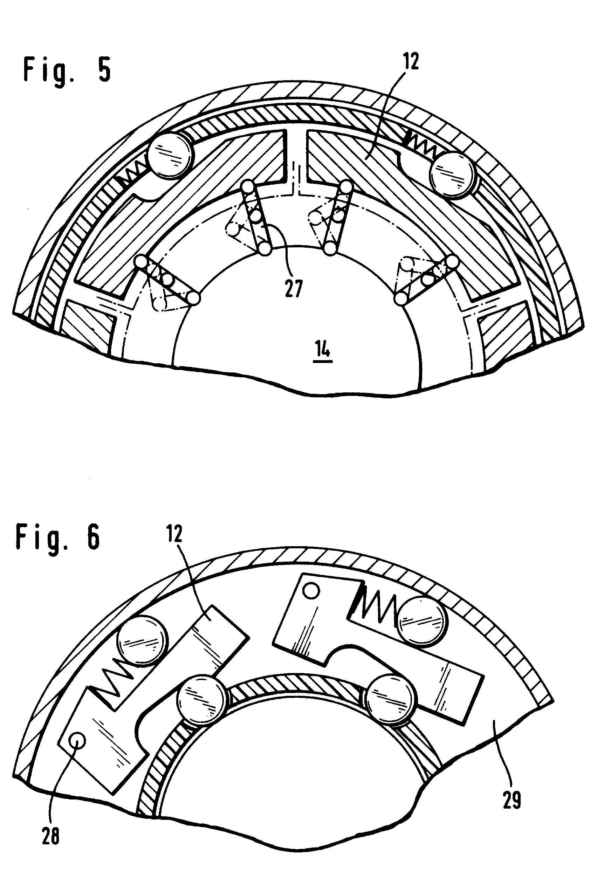

Die Figuren 3 und 4 zeigen eine ähnliche Klemmrollenfreilaufkupplung im Quer- bzw. Längsschnitt. Diese Bauform unterscheidet sich von dem oben beschriebenen Ausführungsbeispiel dadurch, daß jeweils eine Klemmrampe 10 an der Außenoberfläche eines Segmentes 12 angeordnet und der Klemmrollenkäfig 9 um einen bestimmten Winkel schwenkbar mit den Segmenten 12 des inneren Klemmrings 3 verbunden ist. Die Segmentbetätigung erfolgt über die in einem fest mit der Welle 14 verbundenen Betätigungselementekäfig 20 angeordneten Betätigungsrollen 21, welche gegen die in Umfangsrichtung geneigten Keilflächen 15 der Segmente 12 anlaufen. Die formschlüssige Mitnahme der Segmente 12 durch die Welle 14 im jeweiligen Endbereich des Schwenkwinkels wird bei dieser Ausführungsvariante durch die in axialer Richtung bis zur Hälfte der Länge der Betätigungsrollen 21 bis auf die Welle herabreichende Segmentfläche 22 sichergestellt. Zur Kopplung der Segmente 12 mit dem Abtriebsteil 23 greifen in die Radialnuten 24 die am Abtriebsteil 23 angebrachten Nasen 25 ein. Betätigungselementekäfig 20 und Klemmrollenkäfig 9 sind mittels der Stellscheibe 26 einstückig miteinander und mit der Welle 14 verbunden. Bei der Ausführung nach den Figuren 3 und 4 ergibt sich aufgrund der Kopplung des Klemmrollenkäfigs 9 mit der Welle 14 der Vorteil, daß neben der Freischaltung des Klemmrollenfreilaufs durch Absenken der Segmente 12 gleichzeitig die Klemmrollen 6 durch die Relativdrehung des Klemmrollenkäfigs 9 aus dem Klemmbereich der Klemmrampen 10 herausgeschoben werden, womit sich extrem kurze Schaltwege ergeben. Eine in Umfangsrichtung kippstabile Lage der Segmente wird durch die Zuordnung je zweier Betätigungselemente 21 pro Segment erreicht.

In Figur 5 ist eine Alternative zur Segmentbetätigung in Form einer Kniehebelverbindung 27 der Segmente 12 mit der Welle 14 dargestellt.

Figur 6 zeigt eine besondere Ausgestaltung der Segmente 12, als Schwenksegmente, welche hier mittels der Stifte 28 schwenkbar an einem scheibenförmigen Abtriebsteil 29 gelagert sind.

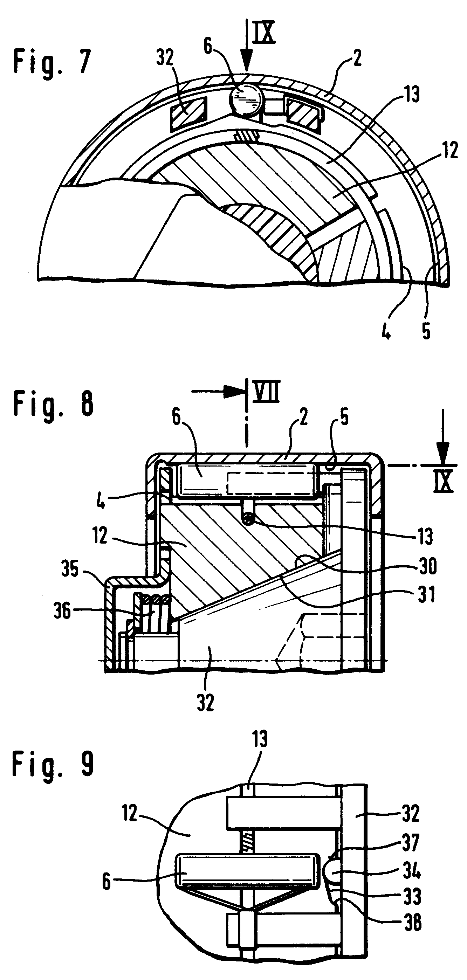

Die Figuren 7, 8 und 9 zeigen einen Längs-, einen Querschnitt und eine Teilansicht einer Klemmrollenfreilaufkupplung mit einer Segmentbetätigung über Kegelflächen 30, 31. Die eigentliche Gestaltung der Klemmrollenfreilaufkupplung mit dem äußeren Klemmring 2, den Klemmrollen 6 und den Segmenten 12 entspricht im wesentlichen der Darstellung und Beschreibung der Figur 3, allerdings weisen die Segmente 12 an ihrer der Welle 14 zugewandten Mantelfläche eine in axialer Richtung geneigte kegelige Flächen 30 auf, an der die Kegelfläche 31 des Schaltelementes 32 anliegt. Die Segmente 12 und das Schaltelement 32 sind zueinander längsverschieblich, wobei jedes Segment 12 eine einer Schraubenlinie folgende Stirnfläche 33 aufweist, gegen die ein am Schaltelement 32 angebrachter axialer Betätigungsnocken 34 anläuft. Die Segmente 12 sind in radialer und in beschränktem Maße in axialer Richtung verschiebbar mit dem Abtriebsteil 35 verbunden. Sie werden durch die Feder 13 zusammengehalten und sind durch die Schraubenfeder 36 in axialer Richtung so belastet, daß sich eine Vorspannung im Sinne einer Abstandsverringerung der Klemmbahnen 4, 5 ergibt. Bei einer Relativdrehung von Schaltelement 32 und Segmenten 12 werden in der gezeigten Stellung über die Betätigungsnocken 34 und die Stirnfläche 33 die Segmente axial relativ zum Schaltelement 32 im Sinne einer Abstandsvergrößerung der Klemmbahnen 4, 5 verschoben. Die Segmente 12 sind wiederum auf dem Schaltteil 32 schwenkbar gelagert, wobei die Anschläge 37, 38 an den Enden der Stirnfläche 33 für eine formschlüssige Mitnahme der Segmente 12 durch das Schaltteil 32 sorgen.

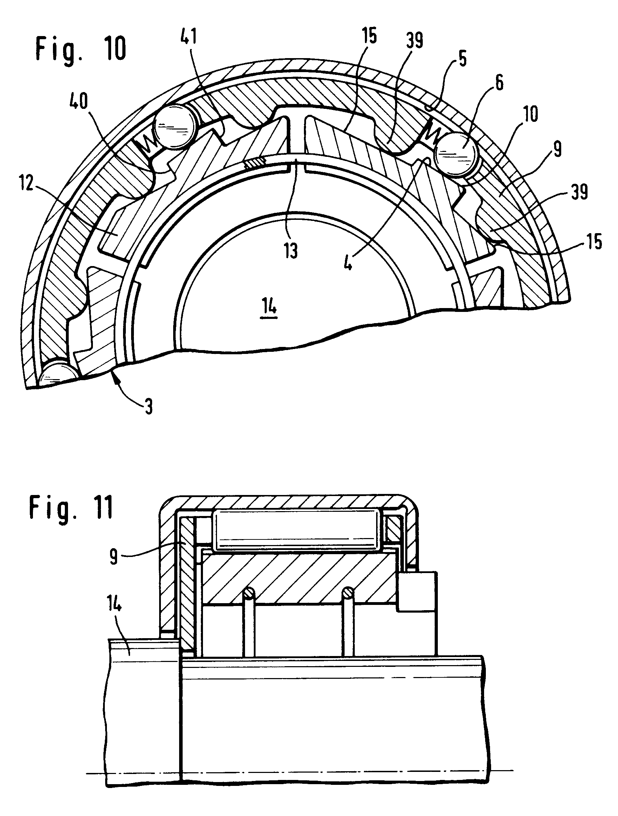

In den Figuren 10 und 11 ist eine Klemmrollenfreilaufkupplung dargestellt, bei der die Segmente 12 wiederum den inneren Klemmring 3 bilden, der allerdings durch die Feder 13, die hier als Spreizfeder ausgebildet ist, im Sinne einer Verringerung des Abstandes der Klemmbahnen 4, 5 vorgespannt ist. An der Außenoberfläche der Segmente 12 sind Klemmrampen vorgesehen, die mit den im Klemmkörperkäfig 9 angeordneten Klemmrollen 6 korrespondieren. In Umfangsrichtung neben den Klemmrampen 10 sind in Umfangsrichtung geneigte Keilflächen vorgesehen, gegen die fest mit dem Klemmkörperkäfig 9 verbundene Betätigungsnasen 39 anlaufen, so daß bei einer Relativdrehung von Klemmkörperkäfig 9 und Segmenten 12 diese Segmente in radialer Richtung verschoben werden. In diesem Ausführungsbeispiel ist der Klemmrollenkäfig 9 gleichzeitig als Schaltteil ausgeführt und fest mit der Welle 14 verbunden. Die formschlüssige Mitnahme der Segmente 12 durch die Welle 14 erfolgt über die Anschläge 40, 41, gegen die jeweils die Betätigungsnasen 39 anliegen können.

Neben diesen gezeigten Ausführungsbeispielen sind ähnliche gleichwirkende Varianten der Segmentbetätigung denkbar, und zwar sowohl bei einer Anordnung der Segmente als äußerer als auch als innerer Klemmring. Anwendungsmöglichkeiten finden sich beispielsweise bei dem bereits genannten Antriebsvorrichtungen für die Betätigung von Fensterscheiben in Kraftfahrzeugen aber auch in automatischen Getrieben vierradgetriebener Kraftfahrzeuge. Darüberhinaus ist eine Anwendung bei in zwei Richtungen schaltbaren Freilaufkupplungen denkbar, wenn anstelle einer Klemmrampe je zwei entgegengesetzt geneigte, mit einer Klemmrolle korrespondierende Klemmrampen vorgesehen sind.

## Patentansprüche

1. Freilaufkupplung, bestehend aus konzentrisch ineinander angeordneten Klemmringen (2, 3) mit einander gegenüberliegenden Klemmbahnen (4, 5), zwischen denen Klemmelemente (6) angeordnet sind, wobei auf einen Klemmring, welcher durchmesserveränderlich ausgebildet ist, unter Ausnutzung einer Keilflächenwirkung ein gleichachsig zu diesem Klemmring angeordnetes Schaltteil (14, 32) einwirkt, so daß eine Relativdrehung des Schaltteils (14, 32) zum durchmesserveränderlichen Klemmring (3) eine Abstandsänderung der Klemmbahnen (4, 5) hervorruft, **dadurch gekennzeichnet**, daß der durchmesserveränderliche Klemmring (3) durch wenigstens einen axial und radial durchgehenden Schlitz unterteilt und durch wenigstens eine Feder (13) entgegen der durch das Schaltteil (14, 32) bewirkbaren Abstandsänderung der Klemmbahnen (4, 5) vorgespannt ist.

2. Freilaufkupplung nach Anspruch 1, **dadurch gekennzeichnet**, daß mehrere radial unabhängig voneinander bewegliche Segmente (12) den durchmesserveränderlichen Klemmring (3) bilden.

3. Freilaufkupplung nach Anspruch 2, **dadurch gekennzeichnet**, daß die Segmente (12) um einen bestimmten Winkel schwenkbar am Schaltteil (14, 32) gelagert sind und daß im jeweiligen Endbereich des Schwenkwinkels ein Anschlag (17, 18, 37, 38, 40, 41, 22) für eine formschlüssige Mitnahme der Segmente (12) durch das Schaltteil in die jeweilige Drehrichtung vorgesehen ist.

4. Freilaufkupplung nach Anspruch 3, **dadurch gekennzeichnet**, daß die Segmente wenigstens eine in Umfangsrichtung geneigte Keilfläche (15) aufweisen, gegen die ein mit dem Schaltteil (14) verbundenes Betätigungselement (16, 21, 39) anläuft.

5. Freilaufkupplung nach Anspruch 4, **dadurch gekennzeichnet**, daß die Segmente (12) konzentrisch zum Schaltteil (14) angeordnet sind.

6. Freilaufkupplung nach Anspruch 5, **dadurch gekennzeichnet**, daß die Betätigungselemente (16, 21, 39) als mit dem Schaltteil (14, 3) verbundene Nasen (16) ausgebildet sind.

7. Freilaufkupplung nach Anspruch 5, **dadurch gekennzeichnet**, daß die Betätgungselemente als Rollen (21) ausgebildet sind, welche in Taschen eines fest mit dem Schaltteil verbundenen Betätigungselementekäfigs (20) angeordnet sind.

8. Freilaufkupplung nach Anspruch 3, **dadurch gekennzeichnet**, daß zwischen den Segmenten (12) und dem Schaltteil (14) wenigstens je ein Kniehebelgelenk (27) vorgesehen ist.

9. Freilaufkupplung nach einem der Ansprüche 1 bis 8, **dadurch gekennzeichnet**, daß die Segmente 12 durch wenigstens eine Feder (13) im Sinne einer Abstandsvergrößerung der Klemmbahnen (4, 5) radial vorgespannt sind.

10. Freilaufkupplung nach Anspruch 3, **dadurch gekennzeichnet**, daß die Segmente (12) wenigstens eine in axialer Richtung geneigte kegelige Fläche (30) aufweisen, gegen die eine Kegelfläche (31) eines relativ zu den Segmenten (12) längsverschieblichen Schaltelementes (32) anläuft.

11. Freilaufkupplung nach Anspruch 10, **dadurch gekennzeichnet**, daß die Segmente je zwei kegelige Flächen mit entgegengesetzter Neigung aufweisen, gegen die je ein mit dem Schaltteil gekoppelter Kegelring anläuft.

12. Freilaufkupplung nach Anspruch 10 oder 11, **dadurch gekennzeichnet**, daß die Segmente (12) so mit dem Schaltteil (32) gekoppelt sind, daß sie sich bei einer Relativdrehung von Schaltteil (32) und Segmenten (12) axial verschieben.

13. Freilaufkupplung nach einem der Ansprüche 10 bis 12, **dadurch gekennzeichnet**, daß die Segmente (12) eine einer Schraubenlinie folgende axiale Stirnfläche (33) aufweisen, gegen die wenigstens ein mit dem Schaltteil (32) gekoppelter Betätigungsnocken (34) anläuft.

14. Freilaufkupplung nach einem der Ansprüche 10 bis 13, **dadurch gekennzeichnet**, daß die Segmente (12) durch wenigstens eine Feder (36) im Sinne einer Abstandsverringerung der Klemmbahnen (4, 5) radial vorgespannt sind.

15. Freilaufkupplung nach einem oder mehreren der Ansprüche 1 bis 14, **dadurch gekennzeichne**t, daß Klemmrollen (6) als Klemmelemente vorgesehen sind, welche in einem Käfig (9) in Klemmrichtung angefedert untergebracht sind, daß eine der Klemmbahnen (4, 5) mit diesen Klemmrollen (6) zusammenwirkende Klemmrampen (10) aufweist und daß die Segmente (12) den inneren Klemmring (3) bilden, wobei das Schaltteil als konzentrisch in dem inneren Klemmring (3) angeordnete Welle (14) ausgebildet ist.

16. Freilaufkupplung nach Anspruch 15, **dadurch gekennzeichnet**, daß die Klemmrampen (10) auf der Klemmbahn (5) des äußeren Klemmringes (2) angeordnet sind.

17. Freilaufkupplung nach Anspruch 15, **dadurch gekennzeichnet**, daß je eine Klemmrampe (10) auf der Außenoberfläche eines Segmentes (12) angeordnet ist.

18. Freilaufkupplung nach Anspruch 17, **dadurch gekennzeichnet**, daß der Klemmrollenkäfig (9) fest mit dem Schaltteil (14) verbunden ist.

19. Freilaufkupplung nach Anspruch 14, **dadurch gekennzeichnet**, daß die Klemmelemente (6) in einem Käfig (9) untergebracht sind, welcher als Schaltteil (32) ausgebildet ist.

20. Freilaufkupplung nach einem der Ansprüche 15 bis 18, **dadurch gekennzeichnet**, daß das Schaltteil mit einem Antriebs- und der innere Klemmring mit einem Abtriebsorgan verbunden sind, während der äußere Klemmring verdrehfest mit einer Tragkonstruktion verbunden ist.

## Claims

1. Overrunning clutch comprising locking rings (2, 3) arranged concentrically in each other and having mutually facing locking raceways (4, 5) between which locking elements (6) are arranged, a switching member (14, 32) arranged coaxially with one of th locking rings which has a variable diameter acting on this ring while utilizing a wedge-surface effect so that a rotation of the switching member (14, 32) relative to the locking ring (3) of variable diameter causes a change in the distance between the locking raceways (4, 5), characterized in that the locking ring (3) with variable diameter is divided by at least one axially and radially continuous slit and biased by at least one spring (13) to oppose the change in the distance between the locking raceways (4, 5) effectable by the switching member (14, 32).

2. Overrunning clutch according to claim 1, characterized in that the locking ring (3) of variable diameter is constituted by several segments (12) which are radially movable independently of each other.

3. Overrunning clutch according to claim 2, characterized in that the segments (12) are mounted rotatable through a certain angle on the switching member (14, 32), a stop (17, 18, 37, 38, 40, 41, 22) for a positive entrainment of the segments (12) by the switching member in the respective direction of rotation being provided in each of the end regions of the angle of rotation.

4. Overrunning clutch according to claim 3, characterized in that the segments comprise at least one wedge surface (15) which is inclined in the peripheral direction and engaged by an actuating element (16, 21, 39) connected with the switching member (14).

5. Overrunning clutch according to claim 4, characterized in that the segments (12) are arranged concentrically with the switching member (14).

6. Overrunning clutch according to claim 5, characterized in that the actuating elements (16, 21, 39) are made in the form of lugs (16) connected with the switching member (14, 32).

7. Overrunning clutch according to claim 5, characterized in that the actuating elements are made in the form of rollers (21) arranged in pockets of an actuating element cage (20) which is rigidly connected to the switching member.

8. Overrunning clutch according to claim 3, characterized in that at least one knuckle joint (27) is provided between each of the segments (12) and the switching member (14).

9. Overrunning clutch according to one of the claims 1 to 8, characterized in that the segments (12) are biased radially in the direction of increasing the distance between the locking raceways (4, 5) by at least one spring (13).

10. Overrunning clutch according to claim 3, characterized in that the segments (12) comprise at least one tapered surface (30) which is inclined in the axial direction and engaged by a conical surface (31) of a switching member (32) which is longitudinally displaceable relative to the segments (12).

11. Overrunning clutch according to claim 10, characterized in that each of the segments comprises two oppositely inclined tapered surfaces each of which is engaged by a conical ring coupled with the switching member.

12. Overrunning clutch according to claim 10 or 11, characterized in that the segments (12) are coupled with the switching member (32) so as to be axially displaced on a relative rotation between the switching member (32) and the segments (12).

13. Overrunning clutch according to one of the claims 10 to 12, characterized in that the segments (12) comprise a helicoid axial end face (33) which is engaged by at least one actuating cam (34) coupled to the switching member (32).

14. Overrunning clutch according to one of the claims 10 to 13, characterized in that the segments (12) are biased radially in the direction of reducing the distance between the locking raceways (4, 5) by at least one spring (36).

15. Overrunning clutch according to one or more of the claims 1 to 14, characterized in that locking rollers (6) are provided as locking elements which are lodged in a cage (9) while being biased by springs in the locking direction, one of the locking raceways (4, 5) comprises locking ramps (10) cooperating with these locking rollers (6), and the segments (12) form the inner locking ring (3), the switching member being made in the form of a shaft (14) arranged concentrically within the inner locking ring (3).

16. Overrunning clutch according to claim 15, characterized in that the locking ramps (10) are arranged on the locking raceway (5) of the outer locking ring (2).

17. Overrunning clutch according to claim 15, characterized in that one locking ramp (10) is arranged on the outer surface of each segment (12).

18. Overrunning clutch according to claim 17, characterized in that the locking roller cage (9) is rigidly connected to the switching member (14).

19. Overrunning clutch according to claim 14, characterized in that the locking elements (6) are lodged in a cage (9) which is designed as the switching member (32).

20. Overrunning clutch according to one of the claims 15 to 18, characterized in that the switching member is connected to a driving member, and the inner locking ring is connected to a driven member while the outer locking ring is connected, secure against rotation, to a supporting structure.

## Revendications

1. Embrayage à roue libre comprenant des bagues de serrage (2, 3) agencées concentriquement l'une dans l'autre et qui présentent des chemins de serrage (4,5) opposés entre lesquels sont montés des corps de serrage (6), un organe de commutation (14,32) coaxial à l'une des bagues de serrage qui a un diamètre variable et agissant sur cette bague de serrage en utilisant un effet de surface de clavette, de sorte qu'une rotation de l'organe de commutation (14,32) par rapport à la bague de serrage à diamètre variable (3) provoque une modification de la distance entre les chemins de serrage (4,5), caractérisé en ce que la bague de serrage à diamètre variable (3) est divisée par au moins une fente traversant de part en part ladite bague en direction radiale et en direction axiale, et en ce que ladite bague est précontrainte par au moins un ressort (13) pour s'opposer au changement de la distance entre les chemins de serrage (4,5) que peut effectuer l'organe de commutation (14,32).

2. Embrayage à roue libre selon la revendication 1, caractérisé en ce que la bague de serrage à diamètre variable (3) est constituée par plusieurs segments (12) qui peuvent être déplacés radialement indépendamment l'un de l'autre.

3. Embrayage à roue libre selon la revendication 2, caractérisé en ce que les segments (12) sont montés de façon à pouvoir pivoter suivant un certain angle sur l'organe de commutation (14,32), une butée (17,18,37,38,40,41,22) pour l'entraînement positif des segments (12) par l'organe de commutation dans leur direction respective de rotation étant prévue dans chacune des régions terminales de l'angle de pivotement.

4. Embrayage à roue libre selon la revendication 3, caractérisé en ce que les segments comprennent au moins une surface en forme de clavette (15) qui est inclinée dans la direction périphérique et est contactée par un élément d'actionnement (16,21,39) relié à l'organe de commutation (14).

5. Embrayage à roue libre selon la revendication 4, caractérisé en ce que les segments (12) sont agencés concentriquement à l'organe de commutation (14).

6. Embrayage à roue libre selon la revendication 5, caractérisé en ce que les éléments d'actionnement (16,21,39) sont prévus sous la forme de talons (16) reliés à l'organe de commutation (14,32).

7. Embrayage à roue libre selon la revendication 5, caractérisé en ce que les éléments d'actionnement sont configurés en forme de galets (21) et logés dans des poches d'une cage à éléments d'actionnement (20) qui est fixement reliée à l'organe de commutation.

8. Embrayage à roue libre selon la revendication 3, caractérisé en ce qu'entre chaque segment (12) et l'organe de commutation (14), il est prévu au moins une articulation à genouillère (27).

9. Embrayage à roue libre selon l'une des revendications 1 à 8, caractérisé en ce que les segments (12) sont radialement précontraints par au moins un ressort (13) dans le sens de l'augmentation de la distance entre le chemins de serrage (4,5).

10. Embrayage à roue libre selon la revendication 3, caractérisé en ce que les segments (12) comprennent au moins une surface conique (30) inclinée en direction axiale et qui est contactée par la surface conique (31) d'un organe de commutation (32) qui est longitudinalement déplaçable par rapport aux segments (12).

11. Embrayage à roue libre selon la revendication 10, caractérisé en ce que chacun des segments comprend deux surfaces coniques inclinées dans des directions opposées et qui sont chacune contactées par une bague conique accouplée à l'organe de commutation.

12. Embrayage à roue libre selon la revendication 10 ou 11, caractérisé en ce que les segments (12) sont accouplés à l'organe de commutation (32) de manière à se déplacer axialement lors d'une rotation relative entre l'organe de commutation (32) et les segments (12).

13. Embrayage à roue libre selon l'une des revendications 10 à 12, caractérisé en ce que les segments (12) comprennent une face frontale axiale (33) qui est configurée suivant la forme d'une hélice en étant contactée par au moins une came d'actionnement (34) accouplée à l'organe d'actionnement (32).

14. Embrayage à roue libre selon l'une des revendications 10 à 13, caractérisé en ce que les segments (12) sont précontraints par au moins un ressort (36) dans le sens de la réduction de la distance entre les chemins de serrage (4,5).

15. Embrayage à roue libre selon l'une ou plusieurs des revendications 1 à 14, caractérisé en ce que les galets de serrage (6) sont prévus en tant que corps de serrage qui sont logés dans une cage (9) en étant précontraints par des ressorts dans la direction de blocage, en ce que l'un des chemins de serrage (4,5) comprend des rampes de serrage (10) qui coopèrent avec ces galets de serrage (6), et en ce que les segments (12) constituent la bague interne de serrage (3), l'organe de commutation étant configuré sous la forme d'un arbre (14) agencé concentriquement dans la bague interne de serrage (3).

16. Embrayage à roue libre selon la revendication 15, caractérisé en ce que les rampes de serrage (10) sont agencées sur le chemin de serrage (5) de la bague externe de serrage (2).

17. Embrayage à roue libre selon la revendication 15, caractérisé en ce qu'une rampe de serrage (10) est agencée sur la surface extérieure de chaque segment (12).

18. Embrayage à roue libre selon la revendication 17, caractérisé en ce que la cage à galets de serrage (9) est fixement reliée à l'organe de commutation (14).

19. Embrayage à roue libre selon la revendication 14, caractérisé en ce que les corps de serrage (6) sont logés dans une cage (9) qui est configurée en organe de commutation (32).

20. Embrayage à roue libre selon l'une des revendications 15 à 18, caractérisé en ce que l'organe de commutation est relié à un organe moteur, en ce que la bague interne de serrage est reliée à un organe entraîné, et en ce que la bague externe de serrage est reliée, fixe en rotation, à un support.
